(19) Europäisches Patentamt
European Patent Office
Office européen des brevets

(11) EP 3 461 878 B1

(12) # FASCICULE DE BREVET EUROPEEN

(45) Date de publication et mention de la délivrance du brevet:
**06.11.2024 Bulletin 2024/45**

(21) Numéro de dépôt: **18200444.0**

(22) Date de dépôt: **04.05.2016**

(51) Classification Internationale des Brevets (IPC):
***C10M 153/02*** *(2006.01)* ***C23C 22/03*** *(2006.01)*
***C23F 11/173*** *(2006.01)* ***C08F 220/18*** *(2006.01)*
***C08F 230/02*** *(2006.01)* *C10N 20/04 (2006.01)*
*C10N 30/06 (2006.01)* *C10N 30/12 (2006.01)*
*C10N 40/04 (2006.01)* *C10N 40/20 (2006.01)*

(52) Classification Coopérative des Brevets (CPC):
(C-Sets disponibles)
**C10M 153/02; C08F 220/1808; C08F 230/02; C23C 22/03; C23F 11/173;** C10M 2203/1025; C10M 2203/1065; C10M 2209/084; C10M 2225/02; C10N 2020/04; C10N 2030/06; C10N 2030/12; C10N 2040/04; C10N 2040/20 (Cont.)

(54) **UTILISATION DES COPOLYMÈRES PORTEURS DE GROUPES PHOSPHORÉS POUR LA PROTECTION DES MÉTAUX ET LA LUBRIFICATION**

VERWENDUNG VON PHOSPHORGRUPPEN ENTHALTENDEN COPOLYMEREN FÜR DEN SCHUTZ VON METALLEN UND ZUR SCHMIERUNG

USE OF COPOLYMERS COMPRISING PHOSPHORUS GROUPS FOR THE PROTECTION OF METALS AND FOR LUBRICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2015 FR 1500929**

(43) Date de publication de la demande:
**03.04.2019 Bulletin 2019/14**

(62) Numéro(s) de document de la (des) demande(s) initiale(s) en application de l'article 76 CBE:
**16729192.1 / 3 292 189**

(73) Titulaire: **SPECIALTY OPERATIONS FRANCE**
**69003 Lyon (FR)**

(72) Inventeurs:
- **AUBAY, Eric**
**75002 PARIS (FR)**
- **GONZALES, Inigo**
**69007 LYON (FR)**
- **LABEAU, Marie-Pierre**
**92310 SEVRES (FR)**
- **BRAEM, Matthias**
**SHANGHAI, Shanghai 200011 (CN)**
- **GODY, Guillaume**
**92500 RUEIL-MALMAISON (FR)**

(74) Mandataire: **Valentino, Cédric et al**
**Specialty Operations France**
**IAM**
**85 avenue des Frères Perret**
**69190 Saint-Fons (FR)**

(56) Documents cités:
**EP-A1- 1 489 158**
**WO-A1-2006/125892**
**WO-A1-2008/012248**
**US-A- 2 956 952**
**US-A- 3 151 078**
**US-A- 3 243 417**
**US-A- 5 191 029**
**US-A1- 2008 233 390**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
C08F 220/1808, C08F 230/02

## Description

La présente invention a trait au domaine des additifs lubrifiants pour métaux, qui sont destinés à être incorporées notamment :

- dans des compositions visant à limiter les frictions métal/métal lors d'opérations ponctuelles de mise en forme de métaux (par exemple des compositions lubrifiantes pour le tréfilage sous extrême pression ou bien des compositions de découpe de métaux) ;
  et/ou
- dans des compositions destinées à limiter l'usure de pièces métalliques destinées à être mises en contact de façon répétée (des compositions d'huile pour moteurs ou boites de vitesse, typiquement).

Les additifs lubrifiants précités sont en général ajoutés dans des formulations lubrifiantes à base d'huile de type paraffinique ou similaire pour des applications de mise en forme de métal. Pour ce qui est des applications en huile de moteur ou huile de boite de vitesse, la formulation lubrifiante qui intègre les additifs lubrifiants est typiquement à base d'huile de type naphténique ou bien encore de polyalphaoléfines (PAO), de poly(alkylene glycols) ou d'esters.

A titre d'exemple d'additifs lubrifiants pour métal du type précité, on peut notamment mentionner les composés porteurs d'un groupe terminal phosphonate, et en particulier l'additif LUBRHOPHOS® LB-400 (polyoxyéthylène octadecenyl ether phosphate) disponible auprès de la société Solvay.

Les documents WO 2006/125892, WO 2008/012248, US 2008/233390 et US 5 191 029 divulguent des (co)polymères susceptibles d'être obtenus par (co)polymérisation radicalaire au moins des monomères éthyléniquement insaturés et porteurs de groupes phosphorés, ainsi que leur utilisation à titre agent protecteur (anti-corrosion) pour métal en phase aqueuse ou dans des émulsions.

Les documents EP 1 489 158, US 2 956 952, US 3 243 417 et US 3 151 078 divulguent des copolymères oléosolubles porteurs de groupes phosphorés, ainsi que leur utilisation dans des huiles lubrifiantes à titre de lubrifiants, notamment à titre d'additifs extrême-pression.

Un but de la présente invention est de fournir des additifs lubrifiants assurant un effet de lubrification plus important et/ou plus durable que celui obtenu avec les composés phosphonate du type du LUBRHOPHOS LB-400

A cet effet, la présente invention propose l'emploi de copolymères spécifiques à base de plusieurs unités porteuses de groupe phosphorés et d'unités hydrophobes.

Dans le cadre de la présente invention, les inventeurs ont mis en évidence que ces copolymères peuvent être utilisés à titre de lubrifiant pour métal et pour fournir un effet protecteur, notamment un effet anti-usure et un traitement de protection anti-corrosion à la surface de métaux (effet de passivation temporaire ou effet anticorrosion plus durable notamment sur des surfaces d'aluminium).

Plus précisément, selon un premier aspect, l'invention a pour objet l'utilisation, à titre de lubrifiant pour métal et d'agent de protection pour métal dans une huile de type naphténique ou paraffinique, d'un copolymère tel qu'obtenu par copolymérisation radicalaire d'un mélange comprenant :

- des monomères m1, dits aussi « monomères phosphorés », éthyléniquement insaturés et porteurs de groupe phosphorés
- des monomères m2 , dits aussi « monomères hydrophobes », porteurs d'une chaîne hydrocarbonée saturée ou insaturée, de préférence un groupe alkyle ou alcényle, comportant typiquement de 8 à 30 atomes de carbone, ces monomères m2 étant généralement non phosphorés.

Les copolymères de l'invention sont typiquement utilisables pour fournir un effet de lubrification, notamment pour limiter les frictions métal/métal lors d'opérations ponctuelles de mise en forme de métaux (par exemple lors du tréfilage de métaux sous extrême pression ou bien lors de la découpe de métaux) et/ou pour limiter l'usure de pièces métalliques destinées à être mises en contact de façon répétée (moteurs ou boites de vitesse typiquement).

Les copolymères de l'invention permettent em même temps un effet de protection des surfaces métalliques, notamment un effet de passivation, et leur dépôt à la surface de surfaces métalliques (acier, aluminium, cuivre ou laiton par exemple) permet de réduire, voire d'inhiber totalement, les phénomènes de corrosion.

Selon un aspect spécifique, l'invention a pour objet les compositions lubrifiantes comprenant au moins un copolymère du type précité, en mélange avec une huile paraffinique ou une huile naphténique.

Les travaux qui ont été conduits par les inventeurs dans le cadre de la présente invention ont maintenant permis de mettre en évidence que les copolymères obtenus par copolymérisation radicalaire du mélange des monomères m1 et m2 précités s'avèrent particulièrement efficaces pour assurer un effet lubrifiant sur une surface métallique.

Un effet particulièrement intéressant a été identifié par les inventeurs pour les copolymères selon l'invention qui comprennent un nombre important de groupes phosphorés, et ce notamment lorsque les monomères m1 sont des

monomères VPA (acide vinylphosphonique). A cet effet, il est préférable qu'un copolymère selon l'invention comprenne au moins 2 groupes phosphorés par chaîne, par exemple au moins 3 et de préférence au moins 5, plus préférentiellement au moins 8 et encore plus préférentiellement au moins 10. Ce nombre de groupes phosphorés par copolymère peut typiquement être compris entre 5 et 50, par exemple entre 10 et 40. Il n'a généralement pas à dépasser 20 pour qu'on obtienne des résultats intéressants, mais il peut être supérieur. Selon un mode de réalisation particulier, il est compris entre 5 et 30. Par exemple, il peut être typiquement compris entre 10 et 15, par exemple de l'ordre de 12. Alternativement il peut être entre 15 et 35, par exemple de l'ordre de 25 à 30.

Le nombre de groupes phosphorés auquel il est fait référence ici correspond typiquement à un nombre moyen de groupes phosphorés sur l'ensemble des chaînes du copolymère considéré. Ce nombre de groupes phosphorés par chaîne peut typiquement être établi à partir :

- du ratio m1/m2 correspondant au rapport molaire de la quantité de monomères m1 sur la quantité de monomères m2, qui peut être obtenu notamment par RMN, notamment par RMN du proton et/ou du carbone, et par le taux de conversion des monomères m1, qui peut être déterminé notamment par RMN du phosphore ; et

- de la masse molaire du copolymère (qui peut être déterminée par tout moyen connu en soi et notamment par les méthodes décrites ci-après dans la présente description et les exemples)

connaissant la masse moléculaire et le ratio molaire des 2 monomères, on peut remonter au degre moyen de polymérisation en unités phosphorées.

Par ailleurs, il est préférable que la taille des copolymères selon l'invention soit la plus faible possible. Typiquement, on préfère que la masse moléculaire en nombre d'un copolymère utilisé selon l'invention soit inférieure à 100 kg/mol, plus préférentiellement inférieure à 60 kg/mol, par exemple entre 5 et 50, et plus préférentiellement entre 10 et 40 kg/mol, et plus avantageusement entre 10 et 30 kg/mol, par exemple de l'ordre de 20 kg/mol.

Il est cependant le plus souvent préférable que la masse moléculaire en nombre d'un copolymère utilisé selon l'invention ne soit pas trop faible, notamment de façon à pouvoir plus aisément contrôler le nombre de groupes phosphorés par chaîne. A cet effet, on préfère le plus souvent que la masse moléculaire en nombre reste supérieure ou égale à 5 kg/mol, plus préférentiellement à 10 kg/mol.

En général, pour un nombre donné de groupes phosphorés par chaîne, il existe une masse moléculaire en nombre optimale, typiquement entre 10 et 40 kg/mol, pour laquelle le copolymère se révèle tout particulièrement efficace.

La masse moléculaire en nombre à laquelle il est fait référence dans la présente description correspond à la masse moléculaire moyenne en nombre théorique du copolymère, qui est calculée par le rapport global de la masse totale de monomères théoriquement incorporée dans le polymère (qui est égale à la somme des produits de la masse de chaque monomère employé pour la fabrication du copolymère multipliée par la conversion dudit monomère), divisée par le nombre total de chaînes de copolymères.

A masse constante, plus le nombre de groupes phosphorés par chaîne augmente et plus il est possible d'employer le copolymère de façon diluée. Avec un nombre de groupes phosphorés par chaîne relativement faible, typiquement de 2 ou 3, les copolymères de l'invention peuvent être utilisés typiquement dans les mêmes gammes de concentration que le LUBRHOPHOS LB-400, voire à des teneurs un peu plus faibles, avec des performances au moins similaires. Lorsque le nombre de groupes phosphorés par chaîne croît (typiquement lorsqu'il est supérieur à 5, et encore plus lorsqu'il est d'au moins 8, et plus encore lorsqu'il est d'au moins 10), les copolymères selon l'invention sont généralement beaucoup plus efficaces que le LUBRHOPHOS LB-400, et ce même employés en des quantités moindres. Les copolymères de l'invention constituent en cela une excellente alternative au LUBRHOPHOS LB-400. A noter en outre un autre avantage, à savoir que, de par la possibilité de diminuer la teneur en polymère, on peut diminuer la teneur en phosphore, en adéquation avec les exigences réglementaires (qui imposent notamment, en 2016, moins de 800ppm de phosphore dans les huiles moteurs en Europe et en Amérique du Nord)

Différentes caractéristiques et modes de réalisation de l'invention vont maintenant être décrits plus en détails.

- **Les monomères m1**

Les monomères phosphorés m1 constitutifs des copolymères selon l'invention sont des monomères insaturés porteurs d'au moins un groupe phosphoré.

Le groupe phosphoré est de préférence un acide $-P(OH)_2(=O)$ (acide phosphonique lorsque le phosphore est lié directement à un carbone ou bien phosphorique lorsqu'il est lié via un oxygène et s'écrit alors $-OP(OH)_2(=O)$ éventuellement en tout ou partie sous une forme déprotonée, à savoir :

hydrogénophosphonate : $-P(O^-)(OH)(=O)$ ; et/ou

hydrogénophosphate : $-O-P(O^-)(OH)(=O)$ ; et/ou

phosphonate : $-P(O^-)(O^-)(=O)$ ; et/ou

phosphate : $-O-P(O^-)(O^-)(=O)$.

Les monomères m1 sont typiquement des monomères acide vinylphosphonique (VPA).

Alternativement, les monomères m1 peuvent être porteurs d'un groupe ester de phosphate -O-P(OA)(OB)(=O) ou ester de phosphonate -P(OA)(OB)(=O) où A et B sont des groupes alkyle, identiques ou différents, comprenant typiquement de 1 à 4 atomes de carbone (méthyle ou éthyle par exemple). Dans ce cadre, on peut employer des esters d'acide vinylique à titre de tout ou partie des monomères m1, comme par exemple le diallyl de dimethylammoniummethyl phosphonate (DALP).

- **Les monomères m2**

Les monomères hydrophobes m2 peuvent varier en une large mesure, pour autant qu'il s'agisse de monomères copolymérisable en polymérisation radicalaire avec les monomères phosphorés m1.

De façon non limitative, les monomères m2 peuvent par exemple être choisis parmi:

- les esters de l'acide acrylique, de formule :

  $$CH_2=CH-C(=O)-O-R_h$$

  où $R_h$ est une chaîne hydrocarbonée, saturée ou insaturée, de préférence un groupe alkyle ou alcényle, comportant typiquement de 8 à 30 atomes de carbone

- les esters de l'acide méthacrylique, de formule :

  $$CH_2=C(CH_3)-C(=O)-O-R_h$$

  où $R_h$ est une chaîne hydrocarbonée, saturée ou insaturée, de préférence un groupe alkyle ou alcényle, comportant typiquement de 8 à 30 atomes de carbone

- les éthers d'allyle, de formule :

  $$CH_2=CH-C-O-R_h$$

  où $R_h$ est une chaîne hydrocarbonée, saturée ou insaturée, de préférence un groupe alkyle ou alcényle, comportant typiquement de 8 à 30 atomes de carbone

- les éthers de métallyle, de formule :

  $$CH_2=C(CH_3)-C-O-R_h$$

  où $R_h$ est une chaîne hydrocarbonée, saturée ou insaturée, de préférence un groupe alkyle ou alcényle, comportant typiquement de 8 à 30 atomes de carbone

- les alcènes tels que les butylènes et isobutylène.

Selon un mode de réalisation intéressant, les monomères m2 peuvent par exemple être des esters de 2 éthyl hexyle de l'acide acrylique (acrylate de 2-éthylhexyle dit « 2EHA »)

- **La préparation des copolymères selon l'invention**

Les copolymères utiles selon l'invention peuvent être préparés selon tout procédé de polymérisation radicalaire mettant en oeuvre les monomères m1 et m2 en mélange.

Les copolymères utilisés selon l'invention sont typiquement des copolymères statistiques à base des monomères m1 et m2, étant entendu qu'ils peuvent présenter des gradients de concentrations en lesdits monomères notamment compte tenu de la différence de réactivité entre les monomères.

En général, les copolymères selon l'invention ne sont pas des copolymères séquencés, bien que ce mode de réalisation ne soit pas exclu de la portée de l'invention.

Selon un mode de réalisation possible, les copolymères selon l'invention sont préparés par copolymérisation radicalaire contrôlée d'un mélange comprenant les monomères m1 et m2.

La « polymérisation radicalaire contrôlée » est une technique bien connue en soi, qui permet, à l'aide d'agent de contrôle de la polymérisation, d'obtenir des polymères de masses contrôlées et notamment des polymères séquencés dont on peut contrôler à la fois l'architecture et la taille de chacun des blocs. Des procédés de polymérisation radicalaire contrôlée bien adaptés pour la synthèse des copolymères utiles selon l'invention sont les procédés dit RAFT ou MADIX, qui mettent typiquement en oeuvre un procédé de transfert réversible par addition-fragmentation employant des agents de contrôle (dits également de transfert réversible), par exemple de type xanthate (composés porteurs de fonctions -SC=SO-). A titre d'exemples de tels procédés, il peut notamment être fait mention de ceux décrits dans WO96/30421, WO 98/01478, WO 99/35178, WO 98/58974, WO 00/75207, WO 01/42312, WO 99/35177, WO 99/31144, FR2794464 ou WO 02/26836.

Ces procédés de polymérisation radicalaire contrôlée conduisent de façon bien connue à la formation de chaînes polymères qui croissent sensiblement toutes à la même vitesse, ce qui se traduit par une augmentation sensiblement linéaire des masses moléculaires avec la conversion et une distribution des masses resserrée, avec un nombre de chaînes qui reste typiquement sensiblement fixe pendant toute la durée de la réaction, ce qui permet de contrôler très aisément la masse molaire moyenne du polymère synthétisé (le rapport initial monomère/agent de contrôle définit le degré de polymérisation obtenu pour les chaînes synthétisées). Les chaînes obtenues présentent par ailleurs en général un caractère « vivant » : elles présentent en bout de chaîne le groupement réactif présent sur l'agent de contrôle. On peut de ce fait poursuivre la polymérisation sur la chaîne polymère obtenue, en conservant le caractère contrôlé de la polymérisation, ce qui peut notamment être utilisé pour synthétiser à l'extrémité d'un premier bloc polymère de taille contrôlée un autre bloc de composition différente et également de taille contrôlée .

Lors d'une polymérisation radicalaire contrôlée du type précité, la taille du polymère en formation est contrôlée par le rapport molaire monomère/agent de contrôle correspondant à la quantité initiale de monomères rapportée à la quantité d'agent de contrôle : schématiquement, toutes les chaînes croissent à partir de chacun des agents de contrôle présent et les monomères se répartissent de façon homogène sur toutes les chaînes en croissance. Le rapport molaire monomère/agent de contrôle dicte de ce fait le degré de polymérisation du bloc synthétisé dans chacune des étapes, et permet donc de définir la masse moléculaire moyenne en nombre théorique attendue pour chacun des blocs.

Selon un mode de réalisation avantageux, le copolymère utile selon l'invention est préparé en mettant en contact :

- les monomères éthyléniquement insaturés m1 et m2
- une source de radicaux libres ; et
- un agent de contrôle de la polymérisation radicalaire.

On peut utiliser toute source de radicaux libres connue en soi. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
    - les mélanges de peroxyde d'hydrogène, d'alkyle, peresters, percarbonates et similaires et de n'importe lequel

des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs, et

- les persulfates de métal alcalin en association avec un acide arylphosphinique, tel que l'acide benzène phosphonique et autres similaires, et des sucres réducteurs.

Notamment dans le cas de polymérisations effectuées en milieu aqueux, il peut être envisagé d'utiliser un amorceur radicalaire de type redox, qui présente l'avantage de ne pas nécessiter un chauffage du milieu réactionnel (pas d'amorçage thermique), ce qui permet de mieux gérer encore l'exothermie de la réaction.

Ainsi, la source de radicaux libres employée peut typiquement être choisie parmi les amorceurs redox classiquement utilisés en polymérisation radicalaire, typiquement ne nécessitant pas de chauffage pour leur amorçage. Il s'agit typiquement d'un mélange d'au moins un agent oxydant avec au moins un agent réducteur.

Des systèmes redox possibles comportent des combinaisons telles que :

- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) par exemple l'association de persulfate d'ammonium et de formaldéhyde sulfoxylate de sodium.

Lorsque le copolymère de l'invention est préparé selon un procédé de polymérisation radicalaire contrôlée, sa masse moléculaire moyenne en nombre théorique peut être approximée aisément par la masse totale des monomères incorporées rapportée au nombre d'agents de contrôle introduit, selon la formule donnée dans les exemples ci-attachés. La masse moléculaire en nombre, dans ce cas, peut être asez facilement mesurée expérimentalement, typiquement par RMN du proton (en intégrant le signal RMN du proton caractéristique d'une terminaison du polymère apportée par l'agent de contrôle et en le rapportant à la contribution des signaux intégrant l'ensemble de la chaîne, selon une méthode connue en soi - la RMN du phosphore permet quant à elle d'accéder au taux de conversion des monomères m1).

La nature de l'agent de contrôle peut quant à elle varier en une large mesure. Selon une variante intéressante, l'agent de contrôle utilisé est un composé porteur d'un groupe thiocarbonylthio -S(C=S)-. Selon un mode de réalisation particulier, l'agent de contrôle peut être porteur de plusieurs groupes thiocarbonylthio.

Plus généralement, un agent de contrôle adapté à la synthèse du polymère (P) utile selon l'invention répond avantageusement à la formule (A) ci-dessous :

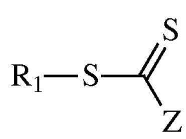

dans laquelle :

- Z représente :

  . un atome d'hydrogène,
  . un atome de Chlore,
  . un radical alkyl éventuellement substitué, aryl éventuellement substitué,
  . un hétérocycle éventuellement substitué,
  . un radical alkylthio éventuellement substitué,
  . un radical arylthio éventuellement substitué,

. un radical alkoxy éventuellement substitué,
. un radical aryloxy éventuellement substitué,
. un radical amino éventuellement substitué,
. un radical hydrazine éventuellement substitué,
. un radical alkoxycarbonyl éventuellement substitué,
. un radical aryloxycarbonyl éventuellement substitué,
. un radical carboxy, acyloxy éventuellement substitué,
. un radical aroyloxy éventuellement substitué,
. un radical carbamoyle éventuellement substitué,
. un radical cyano,
. un radical dialkyl- ou diaryl-phosphonato,
. un radical dialkyl-phosphinato ou diaryl-phosphinato, ou
. une chaîne polymère,

et

- $R_1$ représente :

. un groupe alkyle, acyle, aryle, aralkyle, alcène ou alcyne éventuellement substitué,

. un cycle carboné ou un hétérocycle, saturé ou non, aromatique éventuellement substitué, ou

. une chaîne polymère.

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, $R_1$ est un groupe alkyle substitué ou non, de préférence substitué.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Dans le cadre de la présente invention, il est notamment intéressant d'employer à titre d'agents de contrôle des xanthates, des trithiocarbonates, des dithiocarbamates, ou des dithiocarbazates.

Avantageusement, on utilise comme agent de contrôle des composés porteurs d'une fonction xanthate -S(C=S)O-, par exemple porteur d'une fonction O-ethyl xanthate de formule $-S(C=S)OCH_2CH_3$, comme par exemple le O-ethyl-S-(1-methoxycarbonyl ethyl) xanthate de formule $(CH_3CH(CO_2CH_3))S(C=S)OEt$.

Un autre agent de contrôle possible dans l'étape (E) est le dibenzyltrithiocarbonate de formule $PhCH_2S(C=S)SCH_2Ph$ (où Ph=phényle).

Un copolymère issu d'une polymérisation radicalaire contrôlée du type précité est porteur en fin de chaîne d'un groupe réactif lui conférant un caractère vivant.

Selon un mode de réalisation, le copolymère utile selon l'invention est un copolymère directement issu d'une polymérisation radicalaire contrôlée.

Alternativement, le copolymère employé dans le cadre de l'invention peut être issu d'une étape de polymérisation radicalaire contrôlée suivie d'une étape de désactivation du polymère, cette étape pouvant être conduite selon toute méthode connue en soi, par exemple par ozonolyse ou par réaction avec de l'acide peracétique. Un procédé de désactivation utilisable est par exemple décrit dans la demande WO 2005/040233.

A titre d'exemple, un copolymère particulièrement intéressant selon l'invention est un copolymère de VPA et 2EHA obtenu par copolymérisation radicalaire contrôlée employant le O-ethyl-S-(1-methoxycarbonyl ethyl) xanthate comme agent de contrôle de la polymérisation, présentant 12 unités VPA par chaîne et une masse moléculaire en nombre de 20 kg/mol. Les inventeurs ont mis en lumière que ce polymère permet d'obtenir de très bonnes propriétés lubrifiantes. Plus généralement, les polymères obtenus par copolymérisation radicalaire contrôlée employant le O-ethyl-S-(1-methoxycarbonyl ethyl) xanthate comme agent de contrôle de la polymérisation, présentant de 10 à 15 unités VPA par chaîne et une masse moléculaire en nombre de 10 à 40 kg/mol présentent de bonnes propriétés lubrifiantes.

Selon un autre mode de réalisation, les copolymères de l'invention peuvent être préparés par polymérisation radicalaire en l'absence d'agent de contrôle. Les polymères obtenus par copolymérisation radicalaire non contrôlée, présentant de 8 à 50 unités, notamment de 10 à 40 unités VPA par chaîne et une masse moléculaire en nombre de 10 à 40 kg/mol présentent de bonnes propriétés lubrifiantes. Ils se révèlent en outre, le plus souvent stables thermiquement et conservent typiquement leurs propriétés, notamment lubrifiantes, même lorsqu'ils sont soumis à des températures de 100°C pendant plusieurs jours (ce qui correspond typiquement aux conditions d'utilisation d'une huile lubrifiante dans une boite de vitesse). Ils peuvent être traités à des températures plus élevées, pendant plusieurs jours à 150°C (ce qui reflète les conditions d'utilisation d'une huile pour moteur). Typiquement, ils conservent sensiblement leurs propriétés même après deux jours de traitement thermique, voire au bout de 5 jours ou plus (comme illustré dans les exemples).

La masse moléculaire en nombre dans le cas de polymères préparés par voie radicalaire non contrôlée peut être mesurée notamment par chromatographie d'exclusion stérique (CES) éventuellement couplée à une mesure de rayon de giration par diffusion de la lumière (diffusion laser de type MALLS typiquement).

Quel que soit leur procédé de préparation, que ce soit par voie radicalaire contrôlée ou par voie radicalaire non contrôlée, les polymères de l'invention peuvent être synthétisés selon un mode continu, batch ou semi-batch. Il est particulièrement avantageux de les synthétiser en mode continu, ce qui permet, entre autres, de réguler plus finement l'incorporation des groupements phosphorés au sein de leur structure.

- **Les compositions lubrifiantes comprenant le copolymère selon l'invention**

Les compositions lubrifiantes selon la présente invention comprennent un polymère du type précité, dans une huile paraffinique ou naphténique, avec éventuellement d'autres additifs.

Le copolymère selon l'invention est typiquement présent à raison de 0,2 à 5% en masse par rapport à la masse totale de la composition et le copolymère est typiquement présent à raison de 0,4% à 2% en masse par exemple entre 0,5 et 2% en masse. Notamment lorsque le nombre de groupes phosphorés par chaîne est élevé (au-dessus de 5, notamment supérieur ou égal à 8, voire à 10), le copolymère peut avantageusement être employé à une concentration de 0,4% à 1% en masse par rapport à la masse totale de la composition.

Selon un mode de réalisation particulier, une composition lubrifiante selon l'invention peut être une composition pour le découpage du métal ou pour le tréfilage sous haute pression (auquel cas le copolymère est typiquement dans une huile de type paraffinique).

Selon un autre mode de réalisation, la composition lubrifiante selon l'invention est une huile pour moteur ou une huile pour boite de vitesse. Dans ce cas, le copolymère est typiquement dans une huile de type naphténique.

Pour les applications à titre de lubrifiant, il est préférable de limiter la masse des copolymères employés (notamment pour éviter qu'ils induisent une augmentation trop importante des compositions lubrifiantes où ils sont employés). Dans cette perspective, il sera donc intéressant d'employer des copolymères de masse inférieure à 80 kg/mol, plus préférentiellement inférieure à 60 kg/mol et plus encore inférieure à 50 kg/mol, voire à 40 kg/mol.

- **Les compositions protectrices comprenant le copolymère selon l'invention**

Les compositions protectrices, et notamment passivantes ou anti-corrosion, selon la présente invention comprennent un polymère du type précité, et sont destinées à être appliquées à la surface de métaux pour assurer un effet de protection -temporaire ou plus durable- de la surface, notamment vis-à-vis de la corrosion.

Dans ces compositions, le polymère est généralement véhiculé dans un solvant, qui peut par exemple être une huile, avec éventuellement d'autres additifs.

L'invention va maintenant être illustrée par les exemples qui suivent, dans lesquels des copolymères d'acide vinylphosphonique et d'acrylate de 2-ethylhexyle selon l'invention ont été préparés et dont les performances ont été

évaluées par des tests FALEX extrême pression.

**Exemple 1 :**

**Synthèse d'un copolymère statistique d'acide vinylphosphonique et d'acrylate de 2-éthylhexyle (2EHA) par polymérisation radicalaire contrôlée**

**agent de contrôle : O-ethyl-S-(1-methoxycarbonyl ethyl) xanthate**

**amorceur : 2,2'-Azobis(2-methylbutyronitrile)**

**VPA : 15 mol% - 2EHA :85 mol%**

**$M_n$= 19 700 g·mol$^{-1}$)**

Dans un réacteur double enveloppe de 6L équipé d'un réfrigérant et d'une agitation mécanique, on a introduit, à température ambiante (20°C), 164,3 g d'acide vinylphosphonique (à 85,4% de pureté), 1320,7 g d'acrylate de 2-ethylhexyle, 3409 g d'acétate d'éthyle et 15,64 g de O-ethyl-S-(1-methoxycarbonyl ethyl) xanthate de formule $CH_3CH(CO_2CH_3))SC(=S)OEt$. Le mélange a été dégazé par bullage d'azote pendant 60 minutes correspondant au temps de chauffe du réacteur pour une consigne de température fixée à 70°C. Après 15 minutes (stabilisation de la température du réacteur à 70°C) et toujours sous flux d'azote, on a ajouté au milieu, en une fois, 3,6 g d'amorceur AMBN (2,2'-azobis(2-methylbutyronitrile)), sous forme de solution dans l'acétate d'éthyle à 8,2% en masse. Après 180 minutes sous agitation à 70°C, 3,6 g d'amorceur AMBN, en solution dans l'acétate d'éthyle à 4,3% en masse, sont ajoutés pendant 3 heures. A la fin de l'addition, 3,6 g d'amorceur AMBN sont à nouveau ajoutés au milieu réactionnel, en une fois, sous forme d'une solution dans l'acétate d'éthyle à 8,2% en masse. La réaction est ensuite prolongée pour encore 11 heures. En fin de polymérisation, un échantillon est prélevé pour être analysé par RMN $^1H$ et $^{31}P$ et ainsi obtenir les conversions en monomères.

Après refroidissement du mélange réactionnel, le solvant acétate d'éthyle est ensuite progressivement éliminé par évaporation sous pression réduite et dans le même temps remplacée par l'huile naphténique NYFLEX 800 jusqu'à obtenir une concentration massique finale du copolymère dans l'huile égale à 50%.

Conversion du monomère VPA (RMN $^{31}P$) = 79%
Conversion du monomère 2-EHA (RMN $^1H$) = 96%
Masse molaire moyenne en nombre : 18,6 kg·mol$^{-1}$ (18 600 g/mol)

La masse molaire moyenne du copolymère (masse moyenne théorique telle que définie dans la présente description) a été calculée selon la formule suivante (où on néglige au dénominateur le nombre de chaînes polymères directement issues de la décomposition de l'amorceur ) :

$$\overline{M}_{n\,(\text{théo})} = \frac{[m1]_0 \times M_{m1} \times \text{Conv.}(m1) + [m2]_0 \times M_{m2} \times \text{Conv.}(m2)}{[X]_0} + M_x$$

où:

$\overline{M}_{n(\text{théo})}$ = la masse molaire moyenne en nombre selon la présente description
$[m1]_0$ et $[m2]_0$ - les concentrations initiales en monomères m1 et m2 respectivement
$[X]_0$ = la concentration initiale en agent de contrôle
$M_{m1}$ et $M_{m2}$ = les masses molaires des monomères m1 et m2 respectivement
Conv.(m1) et Conv.(m2) - les conversions des monomères m1 et m2 respectivement (rendement de la réaction)
$M_X$ = la masse molaire de l'agent de contrôle

**Exemple 2 : Synthèse d'un copolymère d'acide vinylphosphonique et d'acrylate de 2-ethylhexyle par polymérisation radicalaire conventionnelle amorceur : 2,2'-Azobis(2-methylbutyronitrile)**

**VPA = 17 mol% – 2EHA = 83 mol%**

Dans un réacteur double enveloppe de 2L équipé d'un réfrigérant et d'une agitation mécanique, on a introduit, à température ambiante (20°C), 84.2 g d'acide vinylphosphonique (à 85,4% de pureté), 88.5 g d'acrylate de 2-ethylhexyle (15% de sa masse totale à ajouter) et 795 g d'acétate d'éthyle. Le mélange a été dégazé par bullage d'azote pendant le temps de chauffe du réacteur jusqu'à une consigne de température fixée à 70°C. Une fois la consigne de température atteinte, on a ajouté au milieu, en une fois, 1.6 g d'amorceur AMBN (2,2'-azobis(2-methylbutyronitrile)), sous forme de solution dans l'acétate d'éthyle à 8% en masse. Après ajout, les 85% restant d'acrylate de 2-éthylhexyle (501.4 g), en solution dans l'acétate d'éthyle à 60% en masse, sont additionnés en continue sur 10 heures. Après 180 minutes de réaction sous agitation à 70°C, 1.6 g d'amorceur AMBN, en solution dans l'acétate d'éthyle à 2% en masse, sont ajoutés en continue sur 7 heures. A la fin de l'addition, un dernier ajout de 1,6 g d'amorceur AMBN est réalisé en une fois sous forme d'une solution dans l'acétate d'éthyle à 8% en masse. La réaction est ensuite prolongée pour encore 11 heures. En fin de polymérisation, un échantillon est prélevé pour être analysé par RMN $^{1}H$ et $^{31}P$ et ainsi obtenir les conversions en monomères.

Après refroidissement du mélange réactionnel, le solvant acétate d'éthyle est ensuite progressivement éliminé par évaporation sous pression réduite et dans le même temps remplacée par l'huile naphténique NYFLEX 800 jusqu'à obtenir une concentration massique finale du copolymère dans l'huile égale à 30%

Conversion du monomère VPA (RMN $^{31}P$) = 84%
Conversion du monomère 2-EHA (RMN $^{1}H$) = 98%
Masse moléculaire moyenne en nombre : 31,2 kg/mol (31200 $g \cdot mol^{-1}$)

Dans ce, la masse molaire moyenne en nombre (théorique) a été calculée selon la formule suivante, prenant en compte la quantité d'amorceur décomposée.

$$\overline{M}_{n\ (\text{théo})} = \frac{[m1]_0 \times M_{m1} \times \text{Conv.}(m1) + [m2]_0 \times M_{m2} \times \text{Conv.}(m2)}{[I_2]_{cons.}} + \frac{M_{I2}}{2}$$

où:

$\overline{M}_{n(\text{théo})}$ = la masse molaire moyenne au sens de la présente description
$[m1]_0$ et $[m2]_0$ - les concentrations initiales en monomères m1 et m2 respectivement
$[I_2]_{cons.}$ = la concentration d'amorceur réellement consommée au cours de la polymérisation
$M_{m1}$ et $M_{m2}$ = les masses molaires des monomères m1 et m2 respectivement
Conv.(m1) et Conv.(m2) - les conversions des monomères m1 et m2 respectivement (rendement de la réaction)
$M_{I2}$ = la masse molaire de l'amorceur

**Exemple 3** :

**Performances des copolymères des exemples 1 et 2 en test FALEX extrême pression**

Les polymères synthétisés dans les exemples 1 et 2 ont été testé sur un tribomètre Falex (de type « pin and V blocks ») où une petite éprouvette métallique cylindrique est placée entre deux mords en «V», plongée dans la composition lubrifiante à tester, et soumise à une charge de rupture croissante jusqu'à ce qu'elle rompe. Les polymères ont été employés à titre d'additifs à différentes concentrations dans une huile naphténique (concentrations données en pourcentage massique de polymère par rapport à la masse totale de la composition lubrifiante).

On a effectué les tests sur des compositions fraîchement préparées, ainsi que sur des compositions traitées thermiquement, à savoir placées à 100°C ou 150°C selon le cas pendant un ou plusieurs jours.

A titre comparatif, on a également testé le LUBRHOPHOS LB-400

Le tableau 1 ci-après reporte, en non gras, la valeur de la charge de rupture, exprimée en lbs (lorsque le tableau indique « >3000 » c'est qu'il n'y a pas eu de rupture à la valeur maximale de 3000 lbs) pour les différents tests.

La perte en masse de l'éprouvette, qui reflète l'usure est aussi reportée entre parenthèse dans le cas où il n'y a pas eu de rupture (le tableau montre ainsi un effet général observé pour les polymères de l'invention, à savoir qu'ils permettent un effet anti-usure en plus d'un effet lubrifiant).

**Tableau 1**

| **Addditif employé** | **Vieillissement** | **Concentration** | | |
|---|---|---|---|---|
| | | **0.75%** | **0.5%** | **0.4%** |
| **Témoin** : Lubrophos LB400 | - | 600 | 600 | <500 |
| **Polymère de l'exemple 1** | - | >3000 (perte : 100 mg) | >3000 (perte : 200 mg) | 2450 |
| **Polymère de l'exemple 2** | | >3000 (perte : 30 mg) | >3000 (perte : 40 mg) | >3000 (perte : 60 mg) |
| | **24h - 150°C** | >3000 (perte : 35 mg) | >3000 (perte : 55 mg) | 2710 |
| | **48h - 150°C** | >3000 (perte : 70 mg) | 2700 | *Non testé* |
| | **6 jours - 150°C** | >3000 (perte : 120 mg) | 2470 | *Non testé* |
| | **10 jours-150°C** | >3000 (perte : 200 mg) | 1980 | *Non testé* |
| | **48h - 100°C** | >3000 (perte : 45 mg) | >3000 (perte : 60 mg) | 2870 |
| | **6 jours - 100°C** | >3000 (perte : 50 mg) | >3000 (perte : 60 mg) | 2720 |
| | **14 jours-100°C** | >3000 (perte : 55 mg) | >3000 (perte : 80 mg) | 2450 |

**Exemple 4** :

**Performances comparées de copolymères selon l'invention en test FALEX extrême pression**

On a réalisé des polymères selon le protocole de l'exemple 1 en modifiant le nombre de groupe VPA par chaîne ($n_{VPA}$) et la masse moléculaire (Mn exprimée en kg/mol ). Le tableau 2 ci-après reflète les valeurs des charges de ruptures en lbs (en non gras dans le tableau) obtenues en test Falex (dans les mêmes conditions que l'exemple 3).

**Tableau 2**

| | | **Concentration en additif dans le lubrifiant (huile naphténique + additif)** | | | | | |
|---|---|---|---|---|---|---|---|
| | | **2%** | **1%** | **0.75%** | **0.5%** | **0.4%** | **0.25%** |
| **Témoin LB400** | | 900 | 600 | 600 | 500 | *Non testé* | *Non testé* |
| **$n_{VPA}$=8** | **Mn=10** | >3000 | >3000 | 900 | 1000 | *Non testé* | *Non testé* |
| **$n_{VPA}$=8** | **Mn=20** | >3000 | >3000 | 800 | 600 | *Non testé* | *Non testé* |
| **$n_{VPA}$=8** | **Mn=30** | >3000 | 1200 | 700 | 600 | *Non testé* | *Non testé* |
| **$n_{VPA}$=8** | **Mn=40** | >3000 | 1500 | 700 | 500 | *Non testé* | *Non testé* |
| **$n_{VPA}$=8** | **Mn=50** | 1200 | 1200 | 700 | 500 | *Non testé* | *Non testé* |
| **$n_{VPA}$=12** | **Mn=20** | >3000 | >3000 | >3000 | 2700 | 2700 | 600 |
| **$n_{VPA}$=15** | **Mn=20** | >3000 | >3000 | >3000 | 2700 | 2700 | 700 |

## Revendications

1. Utilisation d'un copolymère susceptible d'être obtenu par copolymérisation radicalaire d'un mélange comprenant :

   - des monomères m1 éthyléniquement insaturés et porteurs de groupes phosphorés
   - des monomères m2 porteurs d'une chaîne hydrocarbonée saturée ou insaturée,

   à titre d'agent de protection pour métal et de lubrifiant pour métal dans une huile naphténique ou paraffinique.

2. Utilisation selon la revendication 1, où le copolymère comprend au moins 2 groupes phosphorés par chaîne, de préférence au moins 5.

3. Utilisation selon la revendication 2 où le copolymère comprend entre 10 et 15 groupes phosphorés par chaîne.

4. Utilisation selon l'une des revendications 1 à 3, où le copolymère a une masse moléculaire en nombre inférieure à 60 kg/mol, par exemple entre 5 et 50.

5. Utilisation selon la revendication 4, où le copolymère a une masse moléculaire en nombre entre 10 et 40 kg/mol, de préférence entre 10 et 30 kg/mol.

6. Utilisation selon l'une des revendications 1 à 5, où le groupe phosphoré porté par les monomères m1 est un groupe $-P(OH)_2(=O)$ ou $-O-P(OH)_2(=O)$ éventuellement en tout ou partie sous une forme déprotonée ou bien un groupe -P(OA)(OB)(=O) ou -O-P(OA)(OB)(=O) où A et B sont des groupes alkyle, identiques ou différents.

7. Utilisation selon la revendication 6, où les monomères m1 sont des monomères acide vinylphosphonique (VPA).

8. Utilisation selon l'une des revendications 1 à 7, où les monomères m2 sont choisis parmi :

   - les esters de l'acide acrylique, de formule :

   $$CH_2=CH-C(=O)-O-R_h$$

   - les esters de l'acide méthacrylique, de formule :

   $$CH_2=C(CH_3)-C(=O)-O-R_h$$

   où $R_h$ est une chaîne hydrocarbonée, saturée ou insaturée, de préférence un groupe alkyle ou alcényle, comportant typiquement de 8 à 30 atomes de carbone

9. Utilisation selon l'une des revendications 1 à 7, où le copolymère utile selon l'invention est préparé en mettant en contact :

   - les monomères éthyléniquement insaturés m1 et m2
   - une source de radicaux libres ; et
   - optionnellement, un agent de contrôle de la polymérisation radicalaire.

## Patentansprüche

1. Verwendung eines Copolymers, das durch eine radikalische Copolymerisation einer Mischung erhältlich ist, die Folgendes umfasst:

   - Monomere m1, die ethylenisch ungesättigt sind und phosphorhaltige Gruppen aufweisen,
   - Monomere m2, die eine gesättigte oder ungesättigte Kohlenwasserstoffkette aufweisen,
   - als Schutzmittel für Metall und als Schmiermittel für Metall in einem naphthenischen oder Paraffinöl.

2. Verwendung nach Anspruch 1, wobei das Copolymer mindestens 2, vorzugsweise mindestens 5 phosphorhaltige Gruppen pro Kette umfasst.

**3.** Verwendung nach Anspruch 2, wobei das Copolymer zwischen 10 und 15 phosphorhaltige Gruppen pro Kette umfasst.

**4.** Verwendung nach einem der Ansprüche 1 bis 3, wobei das Copolymer ein Zahlenmittel der Molmasse von weniger als 60 kg/mol, beispielsweise zwischen 5 und 50, aufweist.

**5.** Verwendung nach Anspruch 4, wobei das Copolymer ein Zahlenmittel der Molmasse zwischen 10 und 40 kg/mol, vorzugsweise zwischen 10 und 30 kg/mol, aufweist.

**6.** Verwendung nach einem der Ansprüche 1 bis 5, wobei die an den Monomeren m1 gebundene phosphorhaltige Gruppe eine $-P(OH)_2(=O)-$ oder $-O-P(OH)_2(=O)$-Gruppe, die gegebenenfalls ganz oder teilweise als deprotonierte Form vorliegt, oder auch eine -P(OA)(OB)(=O)- oder -O-P(OA) (OB) (=O)-Gruppe ist, wobei A und B Alkylgruppen sind, die gleich oder verschieden sind.

**7.** Verwendung nach Anspruch 6, wobei die Monomere m1 Vinylphosphonsäure- (VPA-)Monomere sind.

**8.** Verwendung nach einem der Ansprüche 1 bis 7, wobei die Monomere m2 ausgewählt sind aus:

- Acrylsäureestern der Formel:

$$\mathbf{CH_2{=}CH{-}C({=}O){-}O{-}R_h}$$

- Methacrylsäureestern der Formel:

$$\mathbf{CH_2{=}C(CH_3){-}C({=}O){-}O{-}R_h}$$

- wobei $R_h$ eine gesättigte oder ungesättigte Kohlenwasserstoffkette, vorzugsweise eine Alkyl- oder Alkenylgruppe, ist, die typischerweise 8 bis 30 Kohlenstoffatome umfasst.

**9.** Verwendung nach einem der Ansprüche 1 bis 7, wobei das erfindungsgemäß brauchbare Copolymer hergestellt wird, indem Folgendes in Kontakt gebracht wird:

- die ethylenisch ungesättigten Monomere m1 und m2
- eine Radikalquelle und
- gegebenenfalls ein Mittel zur Steuerung der radikalischen Polymerisation.

**Claims**

**1.** Use of a copolymer capable of being obtained by radical copolymerization of a mixture comprising:

- monomers m1 which are ethylenically unsaturated and which carry phosphorus groups,
- monomers m2 which carry a saturated or unsaturated hydrocarbon chain,

as protective agent for metals and lubricating agent for metals in a naphthenic or paraffinic oil.

**2.** Use according to Claim 1, where the copolymer comprises at least 2 phosphorus groups per chain, preferably at least 5.

**3.** Use according to Claim 2, where the copolymer comprises between 10 and 15 phosphorus groups per chain.

**4.** Use according to one of Claims 1 to 3, where the copolymer has a number-average molecular weight of less than 60 kg/mol, for example between 5 and 50.

**5.** Use according to Claim 4, where the copolymer has a number-average molecular weight between 10 and 40 kg/mol, preferably between 10 and 30 kg/mol.

**6.** Use according to one of Claims 1 to 5, where the phosphorus group carried by the monomers m1 is a $-P(OH)_2(=O)$

or $-O-P(OH)_2(=O)$ group, optionally in all or part in a deprotonated form, or else a -P(OA)(OB)(=O) or -O-P(OA) (OB) (=O) group where A and B are identical or different alkyl groups.

**7.** Use according to Claim 6, where the monomers m1 are vinylphosphonic acid (VPA) monomers.

**8.** Use according to one of Claims 1 to 7, where the monomers m2 are chosen from:

- acrylic acid esters, of formula:

$$CH_2=CH-C(=O)-O-R_h$$

- methacrylic acid esters, of formula:

$$CH_2=C(CH_3)-C(=O)-O-R_h$$

where $R_h$ is a saturated or unsaturated hydrocarbon chain, preferably an alkyl or alkenyl group, typically comprising from 8 to 30 carbon atoms.

**9.** Use according to one of Claims 1 to 7, where the copolymer of use according to the invention is prepared by bringing into contact:

- the ethylenically unsaturated monomers m1 and m2,
- a source of free radicals, and
- optionally, an agent for controlling the radical polymerization.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2006125892 A
- WO 2008012248 A
- US 2008233390 A
- US 5191029 A
- EP 1489158 A
- US 2956952 A
- US 3243417 A
- US 3151078 A
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A
- WO 2005040233 A